# FASCICULE DE BREVET EUROPEEN

(11) **EP 3 390 520 B1**
(45) Date de publication et mention de la délivrance du brevet: **14.10.2020**
(21) Numéro de dépôt: 16825853.1
(22) Date de dépôt: 15.12.2016
(51) Int. Cl.: C08L 7/00, C08K 3/04, B60C 1/00

(54) **COMPOSITION DE CAOUTCHOUC INCLUANT UN NOIR DE CARBONE SPECIFIQUE**
LATEXZUSAMMENSETZUNG ENTHALTEND EINEN SPEZIELLEN RUSS
RUBBER COMPOSITION CONTAINING A SPECIFIC CARBON BLACK

(30) Priorité: 18.12.2015 FR 1562778
(43) Date de publication de la demande: 24.10.2018
(73) Titulaire: Compagnie Générale des Etablissements Michelin, 63000 Clermont-Ferrand (FR)
(72) Inventeur: VALLAT, Perrine, 63040 Clermont-ferrand Cedex 9 (FR); LOPITAUX, Garance, 63040 Clermont-ferrand Cedex 9 (FR); BADAIRE, Stéphane, 63040 Clermont-ferrand Cedex 9 (FR); VOGLER, Conny, 53809 Ruppichteroth (DE); NIEDERMEIER, Werner, 50321 Brühl (DE)
(74) Mandataire: Cohen, Sylvia
(86) Numéro de dépôt international: PCT/FR2016/053455
(87) Numéro de publication internationale: WO 2017/103496

(56) Documents cités:
- EP-A1- 0 608 892
- WO-A1-2011/113899
- WO-A1-2015/150542

## Description

La présente invention se rapporte aux compositions de caoutchoucs diéniques renforcées par une charge, destinées à la fabrication de pneumatiques ou de produits semi-finis pour pneumatiques, en particulier aux bandes de roulement de ces pneumatiques.

L'invention concerne une composition de caoutchouc notamment pour bande de roulement de pneumatique, et plus particulièrement pour pneumatique destiné à équiper des véhicules portant de lourdes charges et roulant à vitesse soutenue, tels que, par exemple les camions, tracteurs, remorques ou bus routiers, avion etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. Or depuis que les économies de carburant et la nécessité de protéger l'environnement sont devenues une priorité, il est important que les pneumatiques aient une faible consommation d'énergie. L'une des sources de dissipation d'énergie est l'échauffement du pneumatique.

De la même façon, on cherche sans cesse à améliorer les propriétés des pneumatiques routiers et en particulier leur résistance à l'usure et, classiquement, l'amélioration de la résistance à l'usure est connue pour se traduire par une augmentation de la consommation d'énergie.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes. Il existe différents noirs de carbones qui possèdent des caractéristiques distinctes et permettent d'obtenir dans les compositions de caoutchouc les mettant en œuvre, des propriétés spécifiques. Ainsi on sait que les noirs de carbone ayant une grande finesse, c'est-à-dire des noirs de carbone dont la surface spécifique STSA est grande, telles que des noirs de carbone de série ASTM 100 ou 200 permettent l'obtention dans les compositions les comprenant de bonnes propriétés d'usure. Cependant de tels noirs de carbone sont difficiles à disperser dans la matrice élastomérique, ce qui rend à la fois leur mise en œuvre difficile et peut limiter leur potentiel à atteindre des propriétés d'usure optimales.

Ainsi de nouveaux noirs de carbone ont été développés afin d'améliorer ces compromis de propriétés pour leur applications dans des compositions notamment pour véhicules routiers, présentant une étroite distribution de taille d'agrégats, tels que décrits dans les documents EP2778202 ou EP 0608892.

Cependant en plus des propriétés de performances des compositions obtenues en incluant de tels noirs de carbone, il reste une préoccupation industrielle pour les fabricants de pneumatiques qui est la durée de cuisson des compositions. En effet, la durée de cuisson et donc la durée de séjour dans un moule pour pneumatique est une caractéristique critique pour les industriels. Il est donc nécessaire d'optimiser ce critère.
L'ensemble des noirs de carbone dans les deux publications précitées ne permettent pas d'obtenir un tel effet.

Cependant la demanderesse a découvert de façon surprenante que parmi les noirs de carbone décrits dans EP2778202, certains permettaient pour la composition élastomérique les incluant, d'atteindre des propriétés rhéologiques nettement améliorées, permettant une diminution notable du temps de cuisson d'un pneumatique incluant de telles compositions élastomériques.

L'invention a donc pour objet une composition de caoutchouc comprenant au moins un élastomère diénique, une charge renforçante et un système de réticulation caractérisé en ce que la charge renforçante comprend un noir de carbone ayant les caractéristiques suivantes :
- STSA de 140 à 180 m²/g.
- COAN de 0,90 à 1,30 mL/g
- Dst de 40 à 80 nm
- ΔD50/Dst est inférieur ou égal à 0,7
- ΔD10/Dst inférieur 1,4
- (D90-D10)/D50 inférieur ou égal à 0,8

Selon une caractéristique préférée de l'invention, ΔD50/Dst est inférieur ou égal à 0,6.

Préférentiellement, la surface spécifique STSA du noir de carbone est inférieure ou égale à 170 m²/g.

Selon encore une autre caractéristique préférée, l'indice COAN est supérieur ou égal à 0,95 mL/g.

Avantageusement, la valeur Dst est inférieure ou égale à 65 nm.

Selon un mode de réalisation préféré de l'invention, le noir de carbone représente plus de 50% en poids de la charge renforçante, de préférence plus de 60 % en poids de la charge renforçante.

Selon un autre mode de réalisation préféré de l'invention, le noir de carbone représente plus de 90 % de la charge renforçante et encore plus préférentiellement laquelle le noir de carbone représente la seule charge renforçante de la composition.

Selon une variante de réalisation de l'invention le noir de carbone est utilisé en coupage avec une autre charge organique ou inorganique, notamment il est utilisé en coupage avec de la silice.

Avantageusement, l'élastomère diénique de la composition est choisi dans le groupe constitué par les polybutadiènes, les polyisoprènes synthétiques, le caoutchouc naturel, les copolymères de butadiène, les copolymères d'isoprène et les mélanges de ces élastomères.

L'invention concerne enfin un bande de roulement de pneumatique et un pneumatique comprenant une composition telle que décrite précédemment.

### I. MESURES ET TESTS UTILISES

### Mesure de la surface spécifique STSA

La surface spécifique STSA est déterminée selon la procédure décrite dans la norme ASTM D-6556.

### Mesure des paramètres : Dst, ΔD50, ΔD10, D90, D10, et D50

On mesure les valeurs Dst, ΔD50, ΔD10, D90, D10, et D50 au moyen d'un photosédimentomètre centrifuge de type « CPS DC24000 UHR », qui est commercialisé par la société CPS Instruments. Le mode opératoire est le suivant pour ces mesures :
Dans un premier temps une solution de dispersion est préparée en ajoutant, dans une fiole jaugée de 1L, 200 mL d'éthanol, 700 mL d'eau déminéralisée et 0.5g d'un tensioactif non-ionique type Nonidet P40 ou équivalent Après homogénéisation, le pH de la solution est ajusté entre 9 et 10 à l'aide d'une solution d'hydroxyde de sodium 0.1M, puis la solution est complétée jusqu'au trait de jauge de la fiole avec de l'eau déminéralisée. La solution est homogénéisée une nouvelle fois avant utilisation.

L'appareil CPS est ensuite allumé, et les paramètres suivants sont entrés dans le logiciel :
Min diameter : 0.01 µm
Max diameter : 0.7 µm
Particle density : 1.98 g/cm³
Particle refractive index : 1.84
Particle absorption :0.85
Non-sphericity factor : 1

Calibration standard parameters : à ajuster en fonction des caractéristiques des particules de référence utilisées. On peut citer comme référence usuelle des particules de PVC fournies par CPS Instruments dont la taille est calibrée à 0.223 µm. Dans ce cas on utilise les paramètres suivants :
Peak diameter : 0.223 µm
Half height peak width : 0.027
Particle density : 1.385 g/cm³
Fluid density :1.051 g/cm³
Fluid refractive index :1.3612
Fluid viscosity :0.0128 poise

Toutes les autres options du logiciel sont laissées telles qu'établies par défaut par le fabricant de l'appareil. Une fois les paramètres enregistrés, le disque est démarré avec une vitesse de consigne fixée à 24000 rpm.
On prépare ensuite une solution de sédimentation de la façon suivante :
Dans un bécher de 50 mL, on prépare une solution aqueuse à 24% de sucrose (en masse). Dans un deuxième bécher de 50 mL, on prépare une solution aqueuse à 8% de sucrose (en masse).Une fois ces 2 solutions homogénéisées séparément, on effectue des prélèvements dans chacune de ces solutions à l'aide d'une seringue de 2 mL qu'on injecte dans le disque en rotation selon l'ordre suivant :
- Prélèvement 1 :1,8 mL de la solution à 24%
- Prélèvement 2 : 1,6 mL de la solution à 24% + 0,2 mL de la solution à 8%
- Prélèvement 3 : 1,4 mL de la solution à 24% + 0,4 mL de la solution à 8%
- Prélèvement 4 : 1,2 mL de la solution à 24% + 0,6 mL de la solution à 8%
- Prélèvement 5 : 1,0 mL de la solution à 24% + 0,8 mL de la solution à 8%
- Prélèvement 6 : 0,8 mL de la solution à 24% + 1,0 mL de la solution à 8%
- Prélèvement 7 : 0,6 mL de la solution à 24% + 1,2 mL de la solution à 8%
- Prélèvement 8 : 0,4 mL de la solution à 24% + 1,4 mL de la solution à 8%
- Prélèvement 9 : 0,2 mL de la solution à 24% + 1,6 mL de la solution à 8%
- Prélèvement 10 : 1,8 mL de la solution à 8%

Avant chaque injection dans le disque, on homogénéise les 2 solutions dans la seringue en aspirant environ 0,2 mL d'air suivi d'une brève agitation manuelle de quelques secondes, en s'assurant de ne pas perdre de liquide.
Ces injections, dont le volume total est de 18 mL, ont pour but de créer un gradient de densité, utile pour éliminer certaines instabilités pouvant apparaître lors de l'injection de l'échantillon à mesurer. Pour protéger ce gradient de l'évaporation, on ajoute 0,5 mL de dodécane dans le disque en rotation à l'aide d'une seringue de 2 mL. Le disque est ensuite laissé en rotation à 24000 rpm pendant 45 min avant toute première mesure. L'étape suivante consiste à mettre en suspension le noir de carbone à analyser : il faut pour cela peser environ 10 à 20 mg de noir de carbone dans un bécher de 50 mL de forme haute, puis ajouter 50 mL de la solution de dispersion préalablement préparée.
On obtient la suspension de noir de carbone par un traitement aux ultrasons durant 10 minutes dans un bain de glace, au moyen d'une sonde à ultrasons de 750 Watts de type Bioblock Scientific Vibracell 75043 ou équivalent, munie d'une sonde de 13mm de type Bioblock Scientific CV33 ou équivalent, et réglé à 60 % de sa puissance (soit à 60 % de l'amplitude maximale).
Avant chaque injection de l'échantillon à mesurer, on injecte dans le disque 100 µL de la suspension contenant les particules de référence en PVC fournies par CPS Instruments et dont les caractéristiques ont été préalablement enregistrées dans le logiciel. Il convient de démarrer la mesure dans le logiciel de façon simultanée à cette première injection, et d'attendre la confirmation de l'appareil avant de pouvoir injecter 100 µL de la suspension de noir de carbone préalablement sonifiée, en s'assurant à nouveau que la mesure est lancée de façon simultanée à l'injection. Ces injections sont réalisées à l'aide de seringues de 0.5 mL.
A l'issue de la mesure, qui est atteinte au bout du temps nécessaire pour faire sédimenter toutes les particules de plus petit diamètre (configuré dans le logiciel à 0,01µm), le logiciel fournit les proportions relatives en masse pour chaque classe de diamètre mesuré. Cette courbe ainsi obtenue est appelée distribution de taille d'agrégats.
Les valeurs de Dst, ΔD50, ΔD10, D90, D10, et D50 sont calculées de la façon suivante, sur la base de distributions tracées en échelle linéaire :
- Dst : il s'agit du diamètre modal de la distribution (aussi appelé « mode »), c'est-à-dire le diamètre le plus fréquent en masse, identifiable via la position du pic principal de la distribution.
- ΔD50 : le ΔD50 correspond à la largeur à mi-hauteur du pic modal, aussi appelé FWHM (Full Width at Half Maximum)
- ΔD50/Dst : le ratio de ΔD50 à Dst est un descripteur de la largeur relative d'une distribution de taille d'agrégats. Il ne permet cependant pas de rendre compte d'éventuelles trainées de petits et de gros agrégats, agrégats considérés comme importants pour l'atteinte de compromis de performance optimaux. Un descripteur additionnel est nécessaire.

- ΔD10 : il s'agit de la largeur de la distribution à une hauteur de 10% de l'amplitude maximum du pic modal.
- ΔD10/Dst : le ratio de ΔD10 à Dst est un descripteur de la largeur relative d'une distribution, permettant de mieux rendre compte des populations respectives de petits et de gros agrégats que le ΔD50/Dst.
- D90 : l'intégration de la distribution de taille d'agrégats en fonction du diamètre permet d'obtenir une distribution dite « cumulée », c'est-à-dire la masse totale d'agrégats comprise entre le diamètre minimum mesuré et un diamètre d'intérêt. Le D90 est le diamètre en-dessous duquel on retrouve 90% de la masse totale mesurée.
- D10 : le D10 est le diamètre en-dessous duquel on retrouve 10% de la masse totale mesurée.
- D50 : le D50 est le diamètre médian de la distribution, c'est-à-dire le diamètre en-dessous et au-dessus duquel on retrouve 50% de la masse totale mesurée.
- (D90-D10)/D50: il s'agit d'un moyen de décrire la largeur relative d'une distribution de taille d'agrégat, permettant de rendre compte des populations respectives de petits et de gros agrégats, mais moins sujet aux asymétries de distribution que ne l'est le ΔD10/Dst

La figure unique représente une distribution de taille pour le noir de carbone N134. Cette figure permet de faciliter la compréhension des descripteurs précités.

### Indice COAN

L'indice d'absorption d'huile par des d'échantillons comprimés de noir de carbone (COAN) est une mesure de la capacité du noir de carbone à absorber des liquides. Cette propriété est elle-même fonction de la structure du noir de carbone. L'indice COAN est déterminé en utilisant la norme ISO 4656/2012 à l'aide d'un absorptiomètre, avec des d'échantillons comprimés de noir de carbone.

### Rhéométrie

Les mesures sont effectuées à 130°C avec un rhéomètre à chambre oscillante, selon la norme DIN 53529 - partie 3 (juin 1983). L'évolution du couple rhéométrique, ΔCouple, en fonction du temps décrit l'évolution de la rigidification de la composition par suite de la réaction de vulcanisation. Les mesures sont traitées selon la norme DIN 53529 - partie 2 (mars 1983) : t₀ est le délai d'induction, c'est-à-dire le temps nécessaire au début de la réaction de vulcanisation ; t_{α} (par exemple t₉₉) est le temps nécessaire pour atteindre une conversion de α%, c'est-à-dire α% (par exemple 99%) de l'écart entre les couples minimum et maximum.

### Propriétés dynamiques

Les propriétés dynamiques G* et tan(δ)ₘₐₓ sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans des conditions déterminées de température, selon la norme ASTM D 1349 - 99. On effectue un balayage en amplitude de déformation crête à crête de 0,1 à 100% (cycle aller), puis de 100% à 0.1 % (cycle retour). Le résultat exploité est le facteur de perte, tan(δ). Pour le cycle retour, on indique la valeur maximale de tan(δ) observée (tan(δ)max). Les valeurs de tan(δ)max données ci-après sont mesurées à 60°C.
Pour la mesure de tan(δ)_{-37°C}, on effectue un balayage en température, sous une contrainte de 0,7MPa, on enregistre la valeur de tan observée à -37°C.
On rappelle que de manière bien connue de l'homme du métier, la valeur est représentative du potentiel d'adhérence sur sol mouillée : plus la valeur de tan(δ)_{-37°C} est élevée, meilleure est l'adhérence.
Une valeur arbitraire de 100 est donnée pour la composition témoin, un résultat supérieur à 100 indiquant une augmentation de la valeur de tan(δ)_{-37°C}, correspondant donc à une amélioration de la performance d'adhérence sur sol mouillé.

### Essais de traction

Les contraintes à la rupture (en MPa) et les allongements à la rupture (en %) sont également mesurés. Toutes ces mesures de traction sont effectuées à la température de 60°C +/-2°C, et dans les conditions normales d'hygrométrie (50 +/-5% d'humidité relative), selon la norme française NF T 40-101 (décembre 1979). L'énergie à la rupture est le produit de la contrainte à la rupture et de l'allongement à la rupture.

### II. DESCRIPTION DETAILLEE DE L'INVENTION

La présente invention concerne une composition de caoutchouc comprenant au moins un élastomère diénique, une charge renforçante et un système de réticulation caractérisé en ce que la charge renforçante comprend un noir de carbone ayant les caractéristiques suivantes :
- STSA de 140 à 180 m²/g.
- COAN de 0,90 à 1,30 mL/g
- Dst de 40 à 80 nm
- ΔD50/Dst est inférieur ou égal à 0,7
- ΔD10/Dst inférieur ou égal à 1,4
- (D90-D10)/D50 inférieur ou égal à 0,8

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### Elastomère diénique

La composition conforme à l'invention comprend au moins un élastomère diénique.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).
On peut aussi citer comme élastomères fonctionnels ceux préparés par l'utilisation d'un amorceur fonctionnel, notamment ceux portant une fonction amine ou étain (voir par exemple WO 2010072761).
Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques de la composition selon l'invention sont choisis préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est un élastomère isoprénique.
Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Avantageusement il est constitué par du caoutchouc naturel et est utilisé en coupage avec un ou plusieurs élastomères choisis par le groupe constitué par les polybutadiènes, les polyisoprènes synthétiques, les copolymères de butadiène, les copolymères d'isoprène et les mélanges de ces élastomères.
Selon une variante de réalisation de l'invention le caoutchouc naturel est majoritaire (pour plus de 50 pce) un élastomère isoprénique ; selon une autre variante de réalisation, le caoutchouc naturel est le seul élastomère de la composition.

Selon un autre mode de réalisation de l'invention, l'élastomère diénique est constitué par un SBR, utilisé majoritairement ou non, et éventuellement en coupage avec un ou plusieurs élastomères choisis par le groupe constitué par les polybutadiènes, les polyisoprènes synthétiques, les copolymères de butadiène, les copolymères d'isoprène et les mélanges de ces élastomères.
Selon une variante de réalisation de l'invention, le SBR est le seul élastomère de la composition.

La composition selon l'invention peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### Charge renforçante

La composition conforme à l'invention comporte au moins une charge renforçante comprenant un noir de carbone ayant les caractéristiques suivantes :
- STSA de 140 à 180 m²/g.
- COAN de 0,90 à 1,30 mL/g
- Dst de 40 à 80 nm
- ΔD50/Dst est inférieur ou égal à 0,7
- ΔD10/Dst inférieur ou égal à 1,4
- (D90-D10)/D50 inférieur ou égal à 0,8

Conviennent de préférence des noirs de carbone pour lesquels ΔD50/Dst est inférieur ou égal à 0,6.

Selon une autre variante préférentielle, la surface spécifique STSA des noirs de carbone est supérieure ou égale à 135 m²/g. et plus préférentiellement inférieure ou égale à 170 m²/g.

Selon une variante préférentielle de l'invention, l'indice COAN de ces noirs de carbone est supérieur ou égal à 0,95 mL/g.

Selon une autre caractéristique préférentielle des noirs de carbone selon l'invention, la valeur Dst est inférieure ou égale à 65 nm.

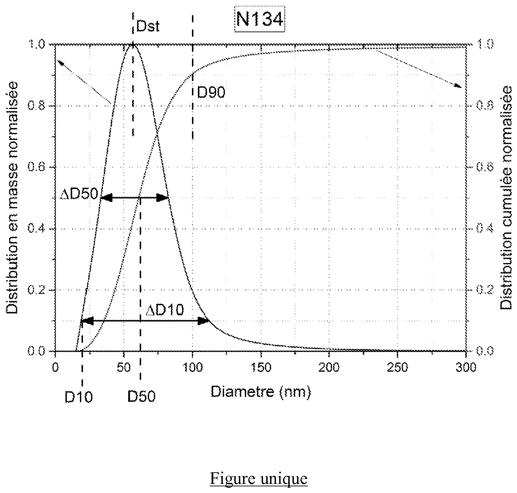

De tels noirs de carbone peuvent être obtenus conformément au procédé décrit dans la publication EP2778202, aux paragraphes [0016] à [0029] en référence à la figure 1 ainsi que le paragraphe [0058].

On notera que les noirs de carbone pourraient être par exemple déjà incorporés à l'élastomère diénique, NR le cas échéant, sous la forme d'un mélange maître, couramment appelé « masterbatch », réalisé par voie sèche ou liquide (voir par exemple demandes WO 97/36724 ou WO 99/16600).

Ce noir de carbone constitue avantageusement plus de 50% en masse de la charge renforçante totale, de préférence plus de 70 % et de façon encore plus préférentielle 90% en masse de la charge renforçante totale de la composition.

Selon une variante de réalisation de l'invention ce noir de carbone peut avantageusement représenter la seule charge renforçante de la composition.

Selon une autre variante de réalisation de l'invention, ce noir de carbone est utilisé en coupage avec une autre charge organique ou inorganique.

Ainsi à titre d'autre charge organique, conviennent particulièrement les noirs de carbone, notamment les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N400, N660, N683, N772).

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant en cela l'emploi d'un agent ou système de couplage destiné à assurer une liaison chimique stable entre l'élastomère isoprénique et ladite charge.
Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non (dans ce cas la charge inorganique ne joue pas de rôle de renforcement).

A titre de charge inorganique renforçante, conviennent particulièrement des charges du type siliceuse ou alumineuse, ou un mélange de ces deux types de charges. Conviennent particulièrement les silices renforçantes connues de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 », « Ultrasil 7005 » et « Ultrasil6000GR » de la société Evonik, les silices « Zeosil 1085GR », « Zeosil 1165MP », « Zeosil 1135MP », « Zeosil 1115MP » et « Zeosil Premium 200MP» de la société Solvay, la silice « Hi-Sil EZ150G » de la société PPG, les silices « Zeopol 8715, 8745 et 8755 » de la Société Huber, les silices à haute surface spécifique telles que décrites dans la demande WO 03/16837.
La surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB est la surface externe déterminée selon la norme française NF T 45-007 de novembre 1987 (méthode B).

On peut également envisager l'ajout au noir de carbone spécifique de la composition, d'autres charges telles que des noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination EcoblackTM « CRX 2000 » ou « CRX4000 ».

De manière préférentielle, le taux de charge totale (noir de carbone selon l'invention et autres charges le cas échéant) est compris entre 20 et 200 pce, plus préférentiellement entre 30 et 150 pce, plus préférentiellement entre 30 et 110 pce.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

A la charge renforçante précédemment décrite, peuvent être également ajoutés, en fonction de l'application visée, des charges inertes (i.e., non renforçantes) telles que particules d'argile, bentonite, talc, craie, kaolin avec un taux inférieur ou égal à 10 pce et préférentiellement inférieur ou égal à 5 pce.

### Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

On peut envisager une ou plusieurs étapes supplémentaires visant à préparer des mélanges maîtres d'élastomère et de charge renforçante, destinés à être introduits lors de la première phase de travail.

Les exemples qui suivent permettent d'illustrer l'invention, cette dernière ne saurait cependant être limitée à ces seuls exemples.

### III- EXEMPLES DE REALISATION DE L'INVENTION

### III-1 Préparation du noir de carbone B conforme à l'invention

Comme explicité précédemment, le noir de carbone est préparé selon un procédé similaire à celui décrit dans le document EP2 778 202, comme expliqué précédemment avec les paramètres de réaction ci-dessous :

| Paramètres | Noir de carbone B |
|---|---|
| Combustion air (Nm³/h) | 2900 |
| Combustion air température (°C) | 620 |
| Matière première type | oil standard |
| Quantité de matière première (Kg/h) | 435 |
| Quantité de gaz (Nm³/h) | 239 |
| Température du réacteur (°C) | 560 |

On obtient ainsi le noir de carbone B ayant les caractéristiques suivantes
- STSA = 150 m²/g.
- COAN = 0,95 mL/g
- Dst = 47 nm
- ΔD50/Dst = 0,56
- (D90-D10)/D50 = 0.64
- ΔD10/Dst = 1.06

### III-2 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique, la charge renforçante puis, après une à deux minutes de malaxage, les divers autres ingrédients, à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées sous la forme de plaques (épaisseur de 2 à 3 mm) de caoutchouc pour la mesure de leurs propriétés physiques ou mécaniques.

### III-3 Essais

Cet essai a pour but de démontrer l'amélioration du compromis de propriétés obtenues pour des compositions de caoutchouc pour pneumatiques conformes à l'invention, comparée à des compositions de caoutchouc comportant des noirs de carbone de l'art antérieur.

On prépare pour cela 10 compositions conformément au précédé décrit précédemment qui diffèrent essentiellement par les unes des autres par les caractéristiques techniques qui suivent :
- T1 est une composition de caoutchouc témoin à base de caoutchouc naturel (100 pce) et comprenant un noir de carbone ayant une surface spécifique STSA d'environ 130 m²/g (N134) ;
- T2 est une composition de caoutchouc témoin à base d'un coupage NR/BR (50/50) et comprenant un noir de carbone N134 ;
- T3 est une composition de caoutchouc identique à T1 à l'exception du noir de carbone qui est un noir de carbone ayant une surface spécifique STSA d'environ 150 m²/g (HP160) ;
- T4 est une composition de caoutchouc identique à T2 à l'exception du noir de carbone qui est un noir de carbone HP 160 ;
- T5 est une composition de caoutchouc témoin à base d'un coupage NR/BR/SBR (60/20/20) et comprenant un noir de carbone HP160 ;
- T6 est une composition de caoutchouc témoin à base d'un SBR (100 pce) et comprenant un noir de carbone HP 160 ;
- C1 est une composition conforme à l'invention, identique à la composition T1 à l'exception de la nature du noir de carbone qui est le noir de carbone B décrit précédemment ;
- C2 est une composition conforme à l'invention, identique à la composition T2 à l'exception de la nature du noir de carbone qui est le noir de carbone B ;
- C3 est une composition conforme à l'invention, identique à la composition T5 à l'exception de la nature du noir de carbone qui est le noir de carbone B ;
- C4 est une composition conforme à l'invention, identique à la composition T6 à l'exception de la nature du noir de carbone qui est le noir de carbone B.

Les tableaux 1 et 3 qui suivent donnent la formulation des différentes compositions (tableau 1 - taux des différents produits exprimés en pce ou parties en poids pour cent parties d'élastomère) ainsi que les propriétés rhéologiques de ces compositions (tableau 3). Le tableau 2 qui suit, précise les caractéristiques des différents noirs utilisés dans les compositions T1 à T6 et C1 à C4.

Au vu du tableau 3, on constate que quelle que soit la matrice élastomérique de la composition de caoutchouc, les compositions C1 à C4 conformes à l'invention qui comportent des noirs de carbone spécifiques se distinguant essentiellement des noirs de carbone « classiques », par leur distribution de taille d'agrégats, présentent des caractéristiques rhéométriques (t0 et t95) améliorées par rapport respectivement aux compositions T1 à T6 incluant les noirs de carbone « classiques » de même surface spécifique ou de surface spécifique inférieure.

De plus, le tableau 4 indique pour les compositions T2 et C2, les propriétés dynamiques mesurées après cuisson à 130°C pendant 60 minutes.
Ce tableau permet de constater que les propriétés dynamiques de la composition C2 sont identiques voire améliorées par rapport à la composition témoin T2.

Ainsi on constate que les compositions de caoutchouc conformes à l'invention utilisant des noirs de carbone spécifiques, permettent d'améliorer significativement les propriétés rhéométriques de ces compositions sans dégradation des propriétés dynamiques et à la rupture de ces compositions, qui sont connues pour être représentatives des propriétés de résistance au roulement et d'usure des pneumatiques comportant de telles compositions en bande de roulement notamment.

**Tableau 1**

| | T1 | T2 | T3 | T4 | T5 | T6 | C1 | C2 | C3 | C4 |
|---|---|---|---|---|---|---|---|---|---|---|
| NR | 100 | 50 | 100 | 50 | 60 | - | 100 | 50 | 60 | - |
| BR | - | 50 | - | 50 | 20 | - | - | 50 | 20 | - |
| SBR | - | - | - | - | 20 | 100 | - | - | 20 | 100 |
| N134 | 54 | 54 | - | - | - | - | - | - | - | - |
| HP160 | - | - | 54 | 54 | 54 | 54 | - | - | - | - |
| Noir B | - | - | - | - | - | - | 54 | 54 | 54 | 54 |
| 6PPD | 2 | 2 | 2 | 2 | 2 | 2 | 2 | 2 | 2 | 2 |
| Paraffine | 1 | 1 | 1 | 1 | 1 | 1 | 1 | 1 | 1 | 1 |
| ZnO | 3 | 3 | 3 | 3 | 3 | 3 | 3 | 3 | 3 | 3 |
| Acide stéarique | 1,5 | 1,5 | 1,5 | 1,5 | 1,5 | 1,5 | 1,5 | 1,5 | 1,5 | 1,5 |
| Soufre | 1,1 | 1,1 | 1,1 | 1,1 | 1,1 | 1,1 | 1,1 | 1,1 | 1,1 | 1,1 |
| CBS | 1,1 | 1,1 | 1,1 | 1,1 | 1,1 | 1,1 | 1,1 | 1,1 | 1,1 | 1,1 |

**Tableau 2**

| | N134 | HP160 | Noir B |
|---|---|---|---|
| STSA (m²/g) | 130 | 155 | 150 |
| COAN (mL/g) | 1,00 | 0,99 | 0,95 |
| Dst (nm) | 56 | 54 | 47 |
| ΔD50/Dst | 0.88 | 0.90 | 0,56 |
| (D90-D10)/D50 | 1.04 | 0.97 | 0,64 |
| ΔD10/Dst | 1.66 | 1.60 | 1.06 |

**Tableau 3**

| | T1 | T2 | T3 | T4 | T5 | T6 | C1 | C2 | C3 | C4 |
|---|---|---|---|---|---|---|---|---|---|---|
| t0 | 13,8 | 16,3 | 15,1 | 18,5 | 15,9 | 23,8 | 11,7 | 14,2 | 11,5 | 17,3 |
| t95 | 35,7 | 37,0 | 40,4 | 39,9 | 41,5 | 70,2 | 38,4 | 36,9 | 38,5 | 66,4 |

**Tableau 4**

| | T2 | C2 |
|---|---|---|
| tan(δ)_{-37°C} | 100 | 104 |
| G* | 100 | 101 |
| Energie rupture | 100 | 102 |

## Revendications

1. Composition de caoutchouc comprenant au moins un élastomère diénique, une charge renforçante et un système de réticulation **caractérisé en ce que** la charge renforçante comprend un noir de carbone ayant les caractéristiques suivantes :
- STSA de 140 à 180 m²/g.
- COAN de 0,90 à 1,30 mL/g
- Dst de 40 à 80 nm
- ΔD50/Dst est inférieur ou égal à 0,7
- ΔD10/Dst inférieur ou égal à 1,4
- (D90-D10)/D50 inférieur ou égal à 0,8,
la surface spécifique STSA étant déterminée conformément à la norme ASTM-D-6556, l'indice COAN étant déterminé conformément à la norme ISO 4656/2012 et les caractéristiques Dst, ΔD50, ΔD10, D90, D10 et D50 étant déterminés selon la page 3, ligne 30 à page 6, ligne 20.

2. Composition selon la revendication 1, dans laquelle ΔD50/Dst est inférieur ou égal à 0,6.

3. Composition selon l'une quelconque des revendications 1 ou 2, dans laquelle la surface spécifique STSA du noir de carbone est inférieure ou égale à 170 m²/g.

4. Composition selon l'une quelconque des revendications 1 à 3, dans laquelle l'indice COAN est supérieur ou égal à 0,95 mL/g.

5. Composition selon l'une quelconque des revendications 1 à 4, dans laquelle la valeur Dst est inférieure ou égale à 65 nm.

6. Composition selon l'une quelconque des revendications précédentes, dans laquelle le noir de carbone représente plus de 50% en poids de la charge renforçante, de préférence plus de 60 % en poids de la charge renforçante et encore plus préférentiellement plus de 90 % de la charge renforçante.

7. Composition selon la revendication 6, dans laquelle le noir de carbone représente la seule charge renforçante de la composition.

8. Composition selon l'une quelconque des revendications 1 à 6, dans laquelle le noir de carbone est utilisé en coupage avec une autre charge organique ou inorganique.

9. Composition selon la revendication 8, dans laquelle le noir de carbone est utilisé en coupage avec de la silice.

10. Composition selon l'une quelconque des revendications précédentes, dans laquelle l'élastomère diénique est choisi dans le groupe constitué par les polybutadiènes, les polyisoprènes synthétiques, le caoutchouc naturel, les copolymères de butadiène, les copolymères d'isoprène et les mélanges de ces élastomères.

11. Composition selon la revendication 10, dans laquelle l'élastomère diénique est le caoutchouc naturel et qu'il est le seul élastomère de la composition.

12. Composition selon la revendication 10, dans laquelle l'élastomère diénique est le caoutchouc naturel et qu'il est utilisé en coupage avec un ou plusieurs élastomères choisis par le groupe constitué par les polybutadiènes, les polyisoprènes synthétiques, les copolymères de butadiène, les copolymères d'isoprène et les mélanges de ces élastomères.

13. Composition selon la revendication 12, dans laquelle l'élastomère est un copolymère de styrène et de butadiène, SBR.

14. Bande de roulement de pneumatique comprenant une composition selon l'une quelconque des revendications 1 à 13.

15. Pneumatique comprenant une composition selon l'une quelconque des revendications 1 à 13.

## Patentansprüche

1. Kautschukzusammensetzung, umfassend mindestens ein Dienelastomer, einen verstärkenden Füllstoff und ein Vernetzungssystem, **dadurch gekennzeichnet, dass** der verstärkende Füllstoff einen Ruß mit den folgenden Eigenschaften umfasst:
- STSA von 140 bis 180 m²/g,
- COAN von 0,90 bis 1,30 ml/g,
- Dst von 40 bis 80 nm,
- ΔD50/Dst kleiner oder gleich 0,7,
- ΔD10/Dst kleiner oder gleich 1,4,
- (D90-D10)/D50 kleiner oder gleich 0,8,
wobei die spezifische STSA-Oberfläche gemäß der Norm ASTM-D-6556 bestimmt wird, die COAN-Zahl gemäß der ISO-Norm 4656/2012 bestimmt wird und die Eigenschaften Dst, ΔD50, ΔD10, D90, D10 und D50 gemäß Seite 3, Zeile 30 bis Seite 6, Zeile 20 bestimmt werden.

2. Zusammensetzung nach Anspruch 1, wobei ΔD50/Dst kleiner oder gleich 0,6 ist.

3. Zusammensetzung nach einem der Ansprüche 1 und 2, wobei die spezifische STSA-Oberfläche des Rußes kleiner oder gleich 170 m²/g ist.

4. Zusammensetzung nach einem der Ansprüche 1 bis 3, wobei die COAN-Zahl größer oder gleich 0,95 ml/g ist.

5. Zusammensetzung nach einem der Ansprüche 1 bis 4, wobei der Dst-Wert kleiner oder gleich 65 nm ist.

6. Zusammensetzung nach einem der vorhergehenden Ansprüche, wobei der Ruß mehr als 50 Gew.-% des verstärkenden Füllstoffs, vorzugsweise mehr als 60 Gew.-% des verstärkenden Füllstoffs und noch weiter bevorzugt mehr als 90 % des verstärkenden Füllstoffs ausmacht.

7. Zusammensetzung nach Anspruch 6, wobei der Ruß den einzigen verstärkenden Füllstoff der Zusammensetzung darstellt.

8. Zusammensetzung nach einem der Ansprüche 1 bis 6, wobei der Ruß in einer Mischung mit einem anderen organischen oder anorganischen Füllstoff verwendet wird.

9. Zusammensetzung nach Anspruch 8, wobei der Ruß in einer Mischung mit Kieselsäure verwendet wird.

10. Zusammensetzung nach einem der vorhergehenden Ansprüche, wobei das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

11. Zusammensetzung nach Anspruch 10, wobei das Dienelastomer Naturkautschuk ist und das einzige Elastomer der Zusammensetzung ist.

12. Zusammensetzung nach Anspruch 10, wobei das Dienelastomer Naturkautschuk ist und in einer Mischung mit einem oder mehreren Elastomeren aus der Gruppe bestehend aus Polybutadienen, synthetischen Polyisoprenen, Butadien-Copolymeren, Isopren-Copolymeren und Mischungen dieser Elastomere verwendet wird.

13. Zusammensetzung nach Anspruch 12, wobei es sich bei dem Elastomer um ein Copolymer von Styrol und Butadien, SBR, handelt.

14. Reifenlauffläche, umfassend eine Zusammensetzung nach einem der Ansprüche 1 bis 13.

15. Reifen, umfassend eine Zusammensetzung nach einem der Ansprüche 1 bis 13.

## Claims

1. Rubber composition comprising at least one diene elastomer, a reinforcing filler and a crosslinking system, **characterized in that** the reinforcing filler comprises a carbon black having the following characteristics:
- STSA of 140 to 180 m²/g
- COAN of 0.90 to 1.30 ml/g
- Dst of 40 to 80 nm
- ΔD50/Dst less than or equal to 0.7
- ΔD10/Dst less than or equal to 1.4
- (D90-D10)/D50 less than or equal to 0.8,
the STSA specific surface area being determined according to standard ASTM D-6556, the COAN number being determined according to standard ISO 4656/2012 and Dst, ΔD50, ΔD10, D90, D10 and D50 characteristics being determined according to page 3, line 30 to page 6, line 20.

2. Composition according to Claim 1, in which ΔD50/Dst is less than or equal to 0.6.

3. Composition according to either one of Claims 1 and 2, in which the STSA specific surface area of the carbon black is less than or equal to 170 m²/g.

4. Composition according to any one of Claims 1 to 3, in which the COAN number is greater than or equal to 0.95 ml/g.

5. Composition according to any one of Claims 1 to 4, in which the Dst value is less than or equal to 65 nm.

6. Composition according to any one of the preceding claims, in which the carbon black represents more than 50% by weight of the reinforcing filler, preferably more than 60% by weight of the reinforcing filler and even more preferably more than 90% by weight of the reinforcing filler.

7. Composition according to Claim 6, in which the carbon black represents the only reinforcing filler of the composition.

8. Composition according to any one of Claims 1 to 6, in which the carbon black is used in a blend with another organic or inorganic filler.

9. Composition according to Claim 8, in which the carbon black is used in a blend with silica.

10. Composition according to any one of the preceding claims, in which the diene elastomer is selected from the group consisting of polybutadienes, synthetic polyisoprenes, natural rubber, butadiene copolymers, isoprene copolymers and the mixtures of these elastomers.

11. Composition according to Claim 10, in which the diene elastomer is natural rubber and it is the only elastomer of the composition.

12. Composition according to Claim 10, in which the natural rubber is used in a blend with one or more elastomers selected from the group consisting of polybutadienes, synthetic polyisoprenes, butadiene copolymers, isoprene copolymers and the mixtures of these elastomers.

13. Composition according to Claim 12, in which the elastomer is a copolymer of styrene and butadiene, SBR.

14. Tyre tread comprising a composition according to any one of Claims 1 to 13.

15. Tyre comprising a composition according to any one of Claims 1 to 13.
